# EUROPEAN PATENT SPECIFICATION

(11) **EP 3 010 222 B1**
(45) Date of publication and mention of the grant of the patent: **19.07.2017**
(21) Application number: 14811465.5
(22) Date of filing: 24.04.2014
(51) Int. Cl.: H04N 5/00, H04B 5/00

(54) **MULTI-TURN COIL MULTIPLEX CIRCUIT AND METHOD AND DEVICE FOR CONTROLLING MULTI-TURN COIL MULTIPLEX CIRCUIT**
MULTIPLEXSCHALTUNG MIT EINER SPULE MIT MEHREREN WINDUNGEN SOWIE VERFAHREN UND VORRICHTUNG ZUR STEUERUNG DER MULTIPLEXSCHALTUNG MIT EINER SPULE MIT MEHREREN WINDUNGEN
CIRCUIT ET PROCÉDÉ DE MULTIPLEXAGE À BOBINE MULTISPIRE ET DISPOSITIF DE COMMANDE D'UN CIRCUIT DE MULTIPLEXAGE À BOBINE MULTISPIRE

(30) Priority: 09.06.2013 CN 201310231968
(43) Date of publication of application: 20.04.2016
(73) Proprietor: Xiaomi Inc., Beijing 100085 (CN)
(72) Inventor: DI, Hao, Beijing 100085 (CN); SHI, Xinming, Beijing 100085 (CN); SUN, Wei, Beijing 100085 (CN)
(74) Representative: Sadler, Peter Frederick
(86) International application number: PCT/CN2014/076105
(87) International publication number: WO 2014/198160

(56) References cited:
- WO-A1-2013/057367
- CN-A- 1 378 404
- CN-A- 1 457 445
- CN-A- 103 347 147
- CN-U- 202 308 282
- CN-U- 202 615 108
- US-A1- 2013 043 835

## Description

### TECHNICAL FIELD

The present disclosure generally relates to the technical field of electronic devices, and more particularly, to a multi-turn-coil multiplex circuit, a method for controlling the same, a mobile device and a device including the same.

### BACKGROUND

NFC (Near Field Communication) is a kind of non-contact identification and communication technology, which may be used for short distance wireless communication between devices such as mobile devices, consumer electronics, personal computers and intelligent controller tools. NFC provides a simple and touch-controlled solution for information exchange, to allow users to easily and intuitively exchange information, access data and enjoy services.

NFC is a kind of wireless communication technology, which requires an antenna to support relevant communication function. Since a NFC operating frequency is 13.56MHz with a large electromagnetic wave length (about 22 meters), and NFC requires a short distance (about 3-5 mm) for reading and writing information, the NFC antennae is typically made of a coil antenna coupled via a magnetic field to adapt to the requirement of NFC.

Due to users' high-standard requirements on the external appearance of the devices, currently, the NFC antenna is typically built in the device. For example, a NFC antenna in a mobile phone is usually attached to a battery cover or a battery, and connected to a NFC RF (Radio Frequency) link via NFC antenna contact points.

However, since the NFC antenna will produce an eddy current in a metal surface when it is close to metal material, a magnetic field due to the eddy current will weaken the magnetic field of the NFC antenna, affecting the performance of the antenna. Therefore, a layer of magnetic material is typically attached below the NFC antenna, such that the magnetic field produced by the NFC antenna on the battery side may be gathered at an area of the magnetic material and will not reach surfaces of components such as a battery, etc., which contain metal, and thus it may avoid the eddy current to be produced on the metal surfaces to weaken the magnetic field produced by the coil itself.

However, the above method for integrating a NFC antenna may damage the integrity of the external appearance of the battery cover of the device, thereby affecting the appearance design of the electronic device. Moreover, since the NFC antenna is connected to the NFC RF link via NFC antenna contact points, the contact of the contact points will deteriorate as the battery cover is repeatedly disassembled and reassembled, thus the performance of the NFC antenna will deteriorate.

Chinese utility model CN 202308282 describes a near field communication (NFC) and frequency modulation (FM) common antenna which comprises an antenna coil. An antenna feeder end of the antenna coil is respectively connected with a near field communication matching circuit and a frequency modulation matching circuit. The antenna coil is respectively connected with the near field communication matching circuit and the frequency modulation matching circuit, so that an NFC antenna and an FM antenna is shared the same antenna carrier. US patent application US 2013/043835 describes an arrangement in which an antenna receives a near field signal from a recharging pad or a reader to provide a reception signal. A detector coupled to the antenna receives the reception signal and detects therefrom a voltage, current or power value representing a power level of the near field signal. A switch is coupled to the detector, and switches the reception signal corresponding to the recharging pad or the reader to a recharging transceiver to recharge a battery, or to a near field communication transceiver, respectively, on the basis of the detected voltage.

### SUMMARY

The present invention is set out in the independent claims. Embodiments of the present disclosure provided a multi-turn-coil multiplex circuit and a method for controlling the same, in which the NFC antenna is disposed on the main board, to solve the problem that the performance of the NFC antenna deteriorates with the repeated usage.

According to a first aspect of the embodiments of the present disclosure, there provides a multi-turn-coil multiplex circuit, including:
a multi-turn coil, a switch, a Near Field Communication NFC matching circuit and a camera sub-board,
wherein the switch includes a common port, a first port and a second port,
the multi-turn coil is connected to the common port, the NFC matching circuit is connected to the first port, and the camera sub-board is connected to the second port, and
in presence of a camera-control signal, the second port is conducted such that the multi-turn coil is configured to function as a focus-adjusting coil for a camera in the camera sub-board, and in absence of the camera-control signal, the first port is conducted such that the multi-turn coil is configured to function as a NFC antenna in the NFC matching circuit.

Preferably, the multi-turn-coil multiplex circuit further includes:
a CPU and a NFC chip,
wherein the CPU is respectively connected to the NFC chip and the camera sub-board, and the NFC chip is connected to the NFC matching circuit,
the CPU is configured to output a NFC control signal, the camera-control signal and a switch-control signal, wherein the switch-control signal includes a first-port-conducting signal and a second-port-conducting signal,
the NFC chip is configured to generate a NFC signal according to the NFC control signal,
when a triggering event for starting the camera is sensed, the CPU outputs the camera-control signal and the second-port-conducting signal, to control the switch to be switched to the second port, and when the second port is conducted, the camera sub-board adjusts a current flowing through the multi-turn coil according to the camera-control signal output from the CPU, and
when a triggering event for shutting the camera is sensed, the CPU outputs the first-port-conducting signal while ceasing outputting the camera-control signal, to control the switch to be switched to the first port, and when the first port is conducted, the NFC matching circuit adjusts resonance of the multi-turn coil according to the NFC signal output from the NFC chip.

Preferably, the multi-turn coil is disposed on a main board.

Preferably, the multi-turn coil has a length being a quarter of an electromagnetic wave length of a NFC operating frequency.

According to a second aspect of the embodiments of the present disclosure, there provides a method for controlling a multi-turn-coil multiplex circuit, wherein the multi-turn-coil multiplex circuit includes a multi-turn coil, a switch, a Near Field Communication NFC matching circuit and a camera sub-board, wherein the switch includes a common port, a first port and a second port, the multi-turn coil is connected to the common port, the NFC matching circuit is connected to the first port, and the camera sub-board is connected to the second port,
wherein the method includes:
in presence of a camera-control signal, conducting the second port such that the multi-turn coil is configured to function as a focus-adjusting coil for a camera in the camera sub-board; and
in absence of the camera-control signal, conducting the first port such that the multi-turn coil is configured to function as a NFC antenna in the NFC matching circuit.

Preferably, the multi-turn-coil multiplex circuit further includes:
a CPU and a NFC chip,
wherein the CPU is respectively connected to the NFC chip and the camera sub-board, and the NFC chip is connected to the NFC matching circuit,
the CPU is configured to output a NFC control signal, the camera-control signal and a switch-control signal, wherein the switch-control signal includes a first-port-conducting signal and a second-port-conducting signal,
a step of, in presence of a camera-control signal, conducting the second port such that the multi-turn coil is configured to function as a focus-adjusting coil for a camera in the camera sub-board, includes:
   when a triggering event for starting the camera is sensed, outputting the camera-control signal and the second-port-conducting signal such that the switch is configured to be switched to the second port according to the second-port-conducting signal; and
   transmitting the camera-control signal to the camera sub-board via the second port, wherein the camera sub-board is configured to adjust a current flowing through the multi-turn coil according to the camera-control signal, and
   a step of, in absence of the camera-control signal, conducting the first port such that the multi-turn coil is configured to function as a NFC antenna in the NFC matching circuit, includes:
      when a triggering event for shutting the camera is sensed, outputting the first-port-conducting signal while ceasing outputting the camera-control signal such that the switch is configured to be switched to the first port according to the first-port-conducting signal;
      transmitting the NFC control signal to the NFC chip, wherein the NFC chip is configured to generate a NFC signal according to the NFC control signal; and
      transmitting the NFC signal to the NFC matching circuit via the first port, wherein the NFC matching circuit is configured to adjust resonance of the multi-turn coil according to the NFC signal.

Preferably, the multi-turn coil is disposed on a main board.

Preferably, the multi-turn coil has a length being a quarter of an electromagnetic wave length of a NFC operating frequency.

According to a third aspect of the embodiments of the present disclosure, there provides a mobile device, wherein the mobile device includes:
a multi-turn coil, a switch, a Near Field Communication NFC matching circuit and a camera sub-board,
wherein the switch includes a common port, a first port and a second port,
the multi-turn coil is connected to the common port, the NFC matching circuit is connected to the first port, and the camera sub-board is connected to the second port; and
in presence of a camera-control signal, the second port is conducted such that the multi-turn coil is configured to function as a focus-adjusting coil for a camera in the camera sub-board, and in absence of the camera-control signal, the first port is conducted such that the multi-turn coil is configured to function as a NFC antenna in the NFC matching circuit.

Preferably, the mobile device further includes:
a CPU and a NFC chip,
wherein the CPU is respectively connected to the NFC chip and the camera sub-board, and the NFC chip is connected to the NFC matching circuit,
the CPU is configured to output a NFC control signal, the camera-control signal and a switch-control signal, wherein the switch-control signal includes a first-port-conducting signal and a second-port-conducting signal,
the NFC chip is configured to generate a NFC signal according to the NFC control signal,
when a triggering event for starting the camera is sensed, the CPU outputs the camera-control signal and the second-port-conducting signal, to control the switch to be switched to the second port, and when the second port is conducted, the camera sub-board adjusts a current flowing through the multi-turn coil according to the camera-control signal output from the CPU, and
when a triggering event for shutting the camera is sensed, the CPU outputs the first-port-conducting signal while ceasing outputting the camera-control signal, to control the switch to be switched to the first port, and when the first port is conducted, the NFC matching circuit adjusts resonance of the multi-turn coil according to the NFC signal output from the NFC chip.

Preferably, the multi-turn coil is disposed on a main board.

Preferably, the multi-turn coil has a length being a quarter of an electromagnetic wave length of a NFC operating frequency.

According to a fourth aspect of the embodiments of the present disclosure, there provides a device, wherein the device includes a multi-turn-coil multiplex circuit including: a multi-turn coil, a switch, a Near Field Communication NFC matching circuit and a camera sub-board, wherein the switch includes a common port, a first port and a second port, the multi-turn coil is connected to the common port, the NFC matching circuit is connected to the first port, and the camera sub-board is connected to the second port, and the device further includes:
one or more processors;
a memory; and
one or more programs, stored in the memory and configured to be executed by one or more processors, wherein the one or more programs has the following functions:
in presence of a camera-control signal, conducting the second port such that the multi-turn coil is configured to function as a focus-adjusting coil for a camera in the camera sub-board; and
in absence of the camera-control signal, conducting the first port such that the multi-turn coil is configured to function as a NFC antenna in the NFC matching circuit.

According to a fifth aspect of the embodiments of the present disclosure, there provides a computer program, which when executing on a processor of a terminal for controlling a multi-turn-coil multiplex circuit of the terminal, performs a method according to the second aspect of embodiments of the present disclosure.

The advantageous effects brought by the technical solutions according to the embodiments of the present disclosure include the following.

In the embodiments of the present disclosure, the NFC antenna and the focus-adjusting coil for a camera is commonly used. Thus, it may achieve the effects of simplifying production process, improving production efficiency and saving human labor and costs of other resources.

In the embodiments of the present disclosure, the NFC antenna is directly integrated on the main board. Thus, it may avoid a poor contact of the contact points of the NFC antenna caused by disassembling and reassembling the battery cover, and the stability of the NFC antenna may be improved. Moreover, with the embodiments of the present disclosure, the NFC antenna may not be attached to the battery cover or the battery, thus integrity of the external appearance may be maintained, so as to present better aesthetic feeling.

It is to be understood that both the foregoing general description and the following detailed description are exemplary and explanatory only and are not restrictive of the invention.

### BRIEF DESCRIPTION OF THE DRAWINGS

The accompanying drawings, which are incorporated in and constitute a part of this specification, illustrate embodiments consistent with the invention and, together with the description, serve to explain the principles of the invention.
Fig.1 is a block diagram of a multi-turn-coil multiplex circuit of a first embodiment, according to an exemplary embodiment;
Fig.2 is a block diagram of a multi-turn-coil multiplex circuit of a second embodiment, according to an exemplary embodiment; and
Fig.3 is a flow chart of a method for controlling a multi-turn-coil multiplex circuit, according to an exemplary embodiment.

### DETAILED DESCRIPTION

In order to make the above objectives, features and advantages of the embodiments of the present disclosure more apparent, the embodiments of the present disclosure will be hereinafter described in detail with reference to the accompany drawings and specific embodiments.

A principal concept of the embodiments of the present disclosure lies in that, a multi-turn coil may be properly configured to implement both a focus adjusting function for a camera and a NFC antenna function.

Currently, many devices such as smart phones, palm computers and the like, are integrated with both NFC and cameras. When a user takes pictures or videos with a camera on a device, the camera may adjust a focal length according to a distance between a scene to be photographed and the camera. That is, a focusing lens of the camera may be moved such that its imaging focus may exactly fall on a light sensor of the camera. Such a process of adjusting a focal length of the camera is performed by changing a magnitude of a current flowing through a focus-adjusting coil of the camera, to adjust a magnitude of a strength of a magnetic field produced by the coil, so as to change an interaction force between an electromagnet composed of the focus-adjusting coil and a permanent magnet integrated on the camera. Thus, a function of changing a distance between the focusing lens of the camera and the light sensor may be implemented, so as to achieve the purpose of adjusting the focal length.

The NFC antenna is substantially an annular antenna, having a total length of approximately a quarter of an electromagnetic wave length of a NFC operating frequency. If the focus-adjusting coil of the camera has a total length approximate to the length, the focus-adjusting coil may also serve as the NFC antenna. Since a resonant frequency of the NFC antenna is mainly determined by the length of the NFC antenna, and the resonant frequency of the NFC antenna may typically adjusted by an additional tuning circuit, errors in the above length within a range of several millimeters are acceptable.

In addition, since the probability of the user using both the NFC to exchange information and the camera at a same time is rather small, commonly using the multi-turn coil may hardly affect a normal usage of the device.

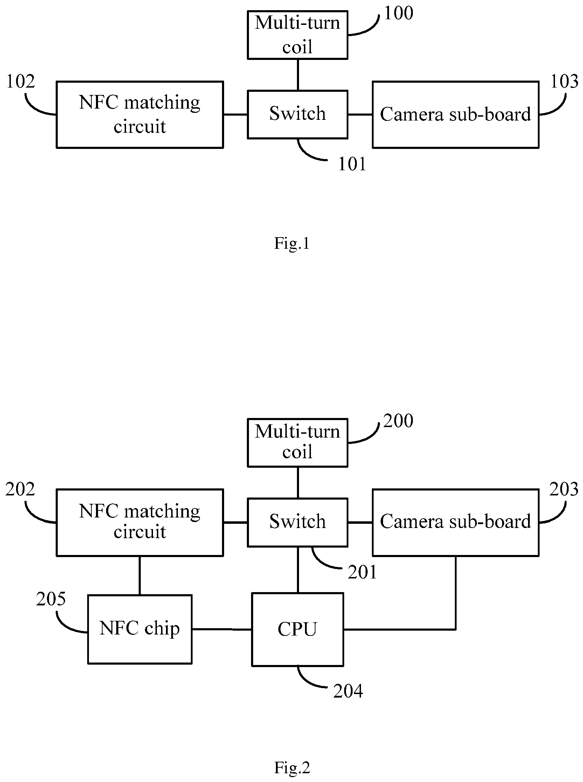

Referring to Fig.1, which is a block diagram of a multi-turn-coil multiplex circuit of a first embodiment, according to an exemplary embodiment. The multi-turn-coil multiplex circuit may include:
a multi-turn coil 100, a switch 101, a NFC matching circuit 102 and a camera sub-board 103.

Wherein the switch includes a common port, a first port and a second port.

The multi-turn coil may be connected to the common port, the NFC matching circuit may be connected to the first port, and the camera sub-board may be connected to the second port.

In presence of a camera-control signal, the second port may be conducted such that the multi-turn coil is configured to function as a focus-adjusting coil for a camera in the camera sub-board. While in absence of the camera-control signal, the first port may be conducted such that the multi-turn coil is configured to function as a NFC antenna in the NFC matching circuit.

In a preferred example of the embodiments of the present disclosure, the switch may be double pole double throw switch.

The multi-turn coil is connected to the common port of the double pole double throw switch, the NFC matching circuit is connected to the first port of the double pole double throw switch, and the camera sub-board is connected to the second port of the double pole double throw switch. In a condition where the camera does not operate, that is, there is no camera-control signal, when the camera-control signal is not sensed, blades of the double pole double throw switch may be connected to the first port, to connect the multi-turn coil with the NFC matching circuit such that the multi-turn coil functions as the NFC antenna. When the camera began to operate, that is, there is a camera-control signal, when the camera-control signal is sensed, the blades of the double pole double throw switch may be connected to the second port, to connect the multi-turn coil with the camera sub-board such that the multi-turn coil functions as the focus-adjusting coil of the camera for adjusting the focal length. When the camera ceases operating, that is, the camera-control signal is ceased, when the camera-control signal is not sensed, the blades of the double pole double throw switch is connected to the first port again to connect the multi-turn coil with the NFC matching circuit.

In the embodiments of the present disclosure, the NFC antenna and the focus-adjusting coil for the camera is commonly used. Thus, it may achieve the effects of simplifying production process, improving production efficiency and saving human labor and costs of other resources.

In a preferred example of the embodiments of the present disclosure, the multi-turn coil may be disposed on a main board.

It should be understood that, the main board may be a main board of a device integrated with NFC and a camera, such as a mobile device, a consumer electronic product, a personal computer, an intelligent controller tool and the like.

In the embodiments of the present disclosure, the NFC antenna is directly integrated on the main board. Thus, it may avoid a poor contact of the contact points of the NFC antenna caused by disassembling and reassembling the battery cover, and the stability of the NFC antenna may be improved. Moreover, with the embodiments of the present disclosure, the NFC antenna may not be attached to the battery cover or the battery, thus integrity of the external appearance may be maintained, so as to present better aesthetic feeling.

In a preferred example of the embodiments of the present disclosure, the multi-turn coil may have a length being a quarter of an electromagnetic wave length of the NFC operating frequency.

It may be learned from a principal of antenna radiation that, when an antenna has a length being a quarter of a wave length, the antenna may resonant at this frequency, and the antenna achieves an optimal performance.

Theoretically, in a free space, a propagation speed of an electromagnetic wave is same with the speed of light, that is, the velocity of the electromagnetic wave is 3*10^8m/s; and the wavelength of the electromagnetic wave is the velocity of the electromagnetic wave divided by its frequency, that is, the wavelength is 3*10^8/ (13.56*10^6)=22.1m. Then, in a free space, the length of the NFC antenna is 22.1/4=5.525m.

In practical application, the NFC antenna may be made of material having a high dielectric constant, so as to reduce its length. Or, the resonant frequency of the coil may be adjusted to the NFC operating frequency by a tuning circuit.

For the NFC antenna, a main factor affecting its performance is the length of the NFC antenna. In addition, other factors affecting its performance also include a current, and a number of the turns, etc., however, these factors affect little. In practical application, a comprehensive effect of the NFC antenna may be adjusted by the tuning circuit. Therefore, in the embodiments of the present disclosure, the length of the multi-turn coil may be selected based on requirements on the performance of the NFC antenna, and parameters such as the number of turns and the thickness of the multi-turn coil may be determined based on other restrictions of the focus-adjusting coil.

Referring to Fig.2, which is a block diagram of a multi-turn-coil multiplex circuit of a second embodiment, according to an exemplary embodiment. The multi-turn-coil multiplex circuit may include:
a multi-turn coil 200, a switch 201, a NFC matching circuit 202, a camera sub-board 203, a CPU 204 and a NFC chip 205.

Wherein the switch includes a common port, a first port and a second port.

The multi-turn coil may be connected to the common port, the NFC matching circuit may be connected to the first port, and the camera sub-board may be connected to the second port. The CPU may be respectively connected to the NFC chip and the camera sub-board, and the NFC chip may be connected to the NFC matching circuit.

The CPU may be configured to output a NFC control signal, the camera-control signal and a switch-control signal, wherein the switch-control signal may include a first-port-conducting signal and a second-port-conducting signal.

The NFC chip may be configured to generate a NFC signal according to the NFC control signal.

When a triggering event for starting the camera is sensed, the CPU outputs the camera-control signal and the second-port-conducting signal, to control the switch to be switched to the second port; and when the second port is conducted, the camera sub-board may adjust a current flowing through the multi-turn coil according to the camera-control signal output from the CPU.

When a triggering event for shutting the camera is sensed, the CPU outputs the first-port-conducting signal while ceasing outputting the camera-control signal, to control the switch to be switched to the first port; and when the first port is conducted, the NFC matching circuit may adjust resonance of the multi-turn coil according to the NFC signal output from the NFC chip.

It may be understood that, in the embodiments of the present disclosure, a default state of the switch may be being connected to the NFC matching circuit, that is, the default state of the multi-turn coil may be functioning as the NFC antenna.

When the camera-control signal is generated, for example, when the user is taking pictures, the triggering event for starting the camera may be an action such as the user hitting a camera icon on the operating interface to start the camera, and an operation instruction may be sent to the CPU. Then the CPU controls the switch to switch the multi-turn coil to be connected to the camera sub-board, to function as the focus-adjusting coil. When the camera is started, there may be a short response time period for the starting. During this time period, the switch of the multi-turn coil may be completed, without affecting the normal usage of the device. The triggering event for shutting the camera may be hitting an exit button, and so on. When the user finishes photographing and shuts down the camera, an operation instruction is also sent to the CPU, and the CPU controls the switch to connect the multi-turn coil with the NFC matching circuit again.

For the user's point of view, since the probability of the user using the NFC to exchange information is generally far larger than the probability of the user using the camera, in order to facilitate the usage, in the embodiments of the present disclosure, the multi-turn coil functions as the NFC antenna in default. When the camera sub-board is required to be connected again, the multi-turn coil functions as the focus-adjusting coil.

However, the above default usage of the multi-turn coil is only an example, and in practice of the embodiments of the present disclosure, other default usage of the multi-turn coil may be being set according to practical situations. For example, the multi-turn coil may be being set to function as the focus-adjusting coil of the camera in default. When it is required, the NFC matching circuit is connected again. For another example, the multi-turn coil may be set to be connected to neither of the NFC matching circuit and the camera sub-board. When it is required, the NFC matching circuit or the camera sub-board may be connected, which will not be elaborated herein for sake of brevity.

In a preferred example of the embodiments of the present disclosure, the multi-turn coil may be disposed on a main board.

In a preferred example of the embodiments of the present disclosure, the multi-turn coil may have a length being a quarter of an electromagnetic wave length of the NFC operating frequency.

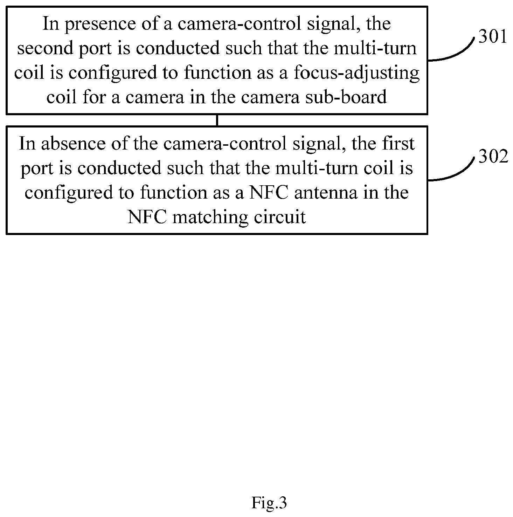

Based on a same inventive concept, Fig.3 shows a flow chart of a method for controlling a multi-turn-coil multiplex circuit, according to an exemplary embodiment. In the embodiments of the present disclosure, the multi-turn-coil multiplex circuit may include a multi-turn coil, a switch, a NFC matching circuit and a camera sub-board, wherein the switch includes a common port, a first port and a second port, the multi-turn coil may be connected to the common port, the NFC matching circuit may be connected to the first port, and the camera sub-board may connected to the second port.

In the embodiments of the present disclosure, the method may include the following steps.

In step 301, in presence of a camera-control signal, the second port is conducted such that the multi-turn coil is configured to function as a focus-adjusting coil for a camera in the camera sub-board.

In step 302, in absence of the camera-control signal, the first port is conducted such that the multi-turn coil is configured to function as a NFC antenna in the NFC matching circuit.

In a preferred embodiment of the present disclosure, the multi-turn-coil multiplex circuit may further include: a CPU and a NFC chip, wherein the CPU may be respectively connected to the NFC chip and the camera sub-board, and the NFC chip may be connected to the NFC matching circuit.

The CPU may be configured to output a NFC control signal, the camera-control signal and a switch-control signal, wherein the switch-control signal may include a first-port-conducting signal and a second-port-conducting signal.

In the embodiments of the present disclosure, the step 301 may further include the following sub-steps.

In sub-step 3011, when a triggering event for starting the camera is sensed, the camera-control signal and the second-port-conducting signal is output such that the switch is configured to be switched to the second port according to the second-port-conducting signal; and

in sub-step 3012, the camera-control signal is transmitted to the camera sub-board via the second port, wherein the camera sub-board is configured to adjust a current flowing through the multi-turn coil according to the camera-control signal.

The step 302 may further include the following sub-steps.

In sub-step 3021, when a triggering event for shutting the camera is sensed, the first-port-conducting signal is output while the camera-control signal is ceased such that the switch is configured to be switched to the first port according to the first-port-conducting signal;
in sub-step 3022, the NFC control signal is transmit to the NFC chip, wherein the NFC chip is configured to generate a NFC signal according to the NFC control signal; and
in sub-step 3023, the NFC signal is transmit to the NFC matching circuit via the first port, wherein the NFC matching circuit is configured to adjust resonance of the multi-turn coil according to the NFC signal.

In a preferred example of the embodiments of the present disclosure, the multi-turn coil may be disposed on a main board.

In a preferred example of the embodiments of the present disclosure, the multi-turn coil may have a length being a quarter of an electromagnetic wave length of the NFC operating frequency.

In the embodiments of the present disclosure, the NFC antenna and the focus-adjusting coil for the camera is commonly used. Thus, it may achieve the effects of simplifying production process, improving production efficiency and saving human labor and costs of other resources.

In the embodiments of the present disclosure, the NFC antenna is directly integrated on the main board. Thus, it may avoid a poor contact of the contact points of the NFC antenna caused by disassembling and reassembling the battery cover, and the stability of the NFC antenna may be improved. Moreover, with the embodiments of the present disclosure, the NFC antenna may not be attached to the battery cover or the battery, thus integrity of the external appearance may be maintained, so as to present better aesthetic feeling.

For the method embodiment, since it is similar to the embodiment of the multi-turn-coil multiplex circuit, the description thereof is brief, and the details may be referred to the description of the embodiment of the multi-turn-coil multiplex circuit.

It should be noted that, for sake of brevity, the method embodiment is described as a combination of a series of actions. However, it should be appreciated by those skilled in the art that, the present disclosure is not restricted by the sequence of the actions as described. According to the present disclosure, some steps may be performed in other sequence or performed at the same time. In addition, it should be appreciated by those skilled in the art that, all the embodiments described in the specification are preferred embodiments, and the involved actions and units may not be essential to the present disclosure.

The embodiments of the present disclosure provide a mobile device, and the mobile device may include:
a multi-turn coil, a switch, a NFC matching circuit and a camera sub-board,
wherein the switch includes a common port, a first port and a second port, and
the multi-turn coil may be connected to the common port, the NFC matching circuit may be connected to the first port, and the camera sub-board may be connected to the second port.

In presence of a camera-control signal, the second port may be conducted such that the multi-turn coil is configured to function as a focus-adjusting coil for a camera in the camera sub-board, and in absence of the camera-control signal, the first port may be conducted such that the multi-turn coil is configured to function as a NFC antenna in the NFC matching circuit.

In a preferred embodiment of the present disclosure, the mobile device may further include:
a CPU and a NFC chip,
wherein the CPU may be respectively connected to the NFC chip and the camera sub-board, and the NFC chip may be connected to the NFC matching circuit.
the CPU may be configured to output a NFC control signal, the camera-control signal and a switch-control signal, wherein the switch-control signal may include a first-port-conducting signal and a second-port-conducting signal, and
the NFC chip may be configured to generate a NFC signal according to the NFC control signal.

When a triggering event for starting the camera is sensed, the CPU may output the camera-control signal and the second-port-conducting signal, to control the switch to be switched to the second port; and when the second port is conducted, the camera sub-board may adjust a current flowing through the multi-turn coil according to the camera-control signal output from the CPU; and
when a triggering event for shutting the camera is sensed, the CPU may output the first-port-conducting signal while ceasing outputting the camera-control signal, to control the switch to be switched to the first port; and when the first port is conducted, the NFC matching circuit may adjust resonance of the multi-turn coil according to the NFC signal output from the NFC chip.

Preferably, the multi-turn coil may be disposed on a main board.

Preferably, the multi-turn coil may have a length being a quarter of an electromagnetic wave length of a NFC operating frequency.

In the embodiments of the present disclosure, the NFC antenna and the focus-adjusting coil for the camera is commonly used. Thus, it may achieve the effects of simplifying production process, improving production efficiency and saving human labor and costs of other resources.

In the embodiments of the present disclosure, the NFC antenna is directly integrated on the main board. Thus, it may avoid a poor contact of the contact points of the NFC antenna caused by disassembling and reassembling the battery cover, and the stability of the NFC antenna may be improved. Moreover, with the embodiments of the present disclosure, the NFC antenna may not be attached to the battery cover or the battery, thus integrity of the external appearance may be maintained, so as to present better aesthetic feeling.

For the embodiment of the mobile device, since it is similar to the embodiment of the multi-turn-coil multiplex circuit, the description thereof is brief, and the details may be referred to the description of the embodiment of the multi-turn-coil multiplex circuit.

The embodiments of the present disclosure also provide a device, and the device may include a multi-turn-coil multiplex circuit. The multi-turn-coil multiplex circuit may include: a multi-turn coil, a switch, a NFC matching circuit and a camera sub-board, wherein the switch includes a common port, a first port and a second port, the multi-turn coil may be connected to the common port, the NFC matching circuit may be connected to the first port, and the camera sub-board may be connected to the second port, and the device may further include:
one or more processors;
a memory; and
one or more modules, stored in the memory and configured to be executed by one or more processors, wherein the one or more modules may have the following functions:
in presence of a camera-control signal, conducting the second port such that the multi-turn coil is configured to function as a focus-adjusting coil for a camera in the camera sub-board; and
in absence of the camera-control signal, conducting the first port such that the multi-turn coil is configured to function as a NFC antenna in the NFC matching circuit.

In an embodiment, the multi-turn-coil multiplex circuit may further include: a CPU and a NFC chip, wherein the CPU may be respectively connected to the NFC chip and the camera sub-board, the NFC chip may be connected to the NFC matching circuit, the CPU may be configured to output a NFC control signal, and the camera-control signal and a switch-control signal, wherein the switch-control signal may include a first-port-conducting signal and a second-port-conducting signal, and the one or more modules may further have the following functions:
when a triggering event for starting the camera is sensed, outputting the camera-control signal and the second-port-conducting signal such that the switch is configured to be switched to the second port according to the second-port-conducting signal; and
transmitting the camera-control signal to the camera sub-board via the second port, wherein the camera sub-board is configured to adjust a current flowing through the multi-turn coil according to the camera-control signal; and
when a triggering event for shutting the camera is sensed, outputting the first-port-conducting signal while ceasing outputting the camera-control signal such that the switch is configured to be switched to the first port according to the first-port-conducting signal;
transmitting the NFC control signal to the NFC chip, wherein the NFC chip is configured to generate a NFC signal according to the NFC control signal; and
transmitting the NFC signal to the NFC matching circuit via the first port, wherein the NFC matching circuit is configured to adjust resonance of the multi-turn coil according to the NFC signal.

In an embodiment, the multi-turn coil may be disposed on a main board.

In an embodiment, the multi-turn coil may have a length being a quarter of an electromagnetic wave length of a NFC operating frequency.

In the embodiments of the present disclosure, the NFC antenna and the focus-adjusting coil for the camera is commonly used. Thus, it may achieve the effects of simplifying production process, improving production efficiency and saving human labor and costs of other resources.

In the embodiments of the present disclosure, the NFC antenna is directly integrated on the main board. Thus, it may avoid a poor contact of the contact points of the NFC antenna caused by disassembling and reassembling the battery cover, and the stability of the NFC antenna may be improved. Moreover, with the embodiments of the present disclosure, the NFC antenna may not be attached to the battery cover or the battery, thus integrity of the external appearance may be maintained, so as to present better aesthetic feeling.

The embodiments of the present disclosure also provide a non-volatile readable storage media, in which one or more programs are stored, when being applied in a device with a multi-turn-coil multiplex circuit which may include: a multi-turn coil, a switch, a NFC matching circuit and a camera sub-board, wherein the switch includes a common port, a first port and a second port, the multi-turn coil may be connected to the common port, the NFC matching circuit may be connected to the first port, and the camera sub-board may be connected to the second port, the one or more programs may cause the device to perform the instructions including the following steps:
in presence of a camera-control signal, conducting the second port such that the multi-turn coil is configured to function as a focus-adjusting coil for a camera in the camera sub-board; and
in absence of the camera-control signal, conducting the first port such that the multi-turn coil is configured to function as a NFC antenna in the NFC matching circuit.

In an embodiment, the multi-turn-coil multiplex circuit may further include: a CPU and a NFC chip, wherein the CPU may be respectively connected to the NFC chip and the camera sub-board, the NFC chip may be connected to the NFC matching circuit, the CPU may be configured to output a NFC control signal, and the camera-control signal and a switch-control signal, wherein the switch-control signal may include a first-port-conducting signal and a second-port-conducting signal. The one or more programs may further have the following functions:
when a triggering event for starting the camera is sensed, outputting the camera-control signal and the second-port-conducting signal such that the switch is configured to be switched to the second port according to the second-port-conducting signal; and
transmitting the camera-control signal to the camera sub-board via the second port, wherein the camera sub-board is configured to adjust a current flowing through the multi-turn coil according to the camera-control signal; and
when a triggering event for shutting the camera is sensed, outputting the first-port-conducting signal while ceasing outputting the camera-control signal such that the switch is configured to be switched to the first port according to the first-port-conducting signal;
transmitting the NFC control signal to the NFC chip, wherein the NFC chip is configured to generate a NFC signal according to the NFC control signal; and
transmitting the NFC signal to the NFC matching circuit via the first port, wherein the NFC matching circuit is configured to adjust resonance of the multi-turn coil according to the NFC signal.

In an embodiment, the multi-turn coil may be disposed on a main board.

In an embodiment, the multi-turn coil may have a length being a quarter of an electromagnetic wave length of a NFC operating frequency.

In the present specification, the embodiments are described in a progressive way, so each embodiment is focused on the difference from other embodiments, thus the similar details may be referred to one another among the embodiments.

It should be understood by those skilled in the art that, the embodiments of the present disclosure may be provided as methods, devices or computer program products. Therefore, the embodiments of the present disclosure may take forms of embodiments of mere hardware, mere software, or a combination of software and hardware. Furthermore, the present disclosure may take forms of computer program products executed on one or more computer usable storage media (including but not limited to disk storage, CD-ROM and optical storage, etc.) containing computer usable program codes.

The present disclosure is described with reference to the flowchart and/or a block diagram of the method, the mobile device (system) and a computer program product according to the embodiments of the present disclosure. It should be understood that each process and/or block in the flowcharts and/or block diagrams, and combinations of processes and/or blocks in the flowcharts and/or block diagrams, may be realized by computer program instructions. These computer program instructions may be supplied to a generate-purpose computer, a special-purpose computer, an embedded processor, or processors of other programmable data processing devices, to create a machine, such that a device for realizing functions designated in one or more processes in the flowcharts and/or in one or more blocks in the block diagrams, may be produced by instructions performed by a computer or processors of other programmable data processing devices.

These computer program instructions may also be stored in a computer readable storage that can boot a computer or other programmable data processing devices to operate in a specific way, such that a manufactured articles including an instruction device may be produced by the instructions stored in said computer readable storage, and said instruction device realizes the functions designated in one or more processes in the flowcharts and/or in one or more blocks in the block diagrams.

These computer program instructions may further be loaded into a computer or other programmable data processing devices, such that a series of operating steps may be performed on the computer or other programmable data processing devices, so as to generate processes realized by the computer, such that steps for realizing the functions designated in one or more processes in the flowcharts and/or in one or more blocks in the block diagrams may be provided by the instructions executed on the computer or other programmable data processing devices.

Although preferred embodiments of the present disclosure have been described, those skilled in the art may make additional alteration and modification to these embodiments once they learn the basic inventive concept. Therefore, the appended claims are intended to be interpreted as covering the preferred embodiments and all of the alterations and modifications falling into the scope of the present disclosure.

At last, it should be further noted that, as used herein, relation terms such as "first" and "second" are used merely to distinguish a subject or an operation from another subject or another operation, and not to imply any substantial relation or order between these subjects or operations. Moreover, terms "include", "contain" or any variation thereof are intended to cover an nonexclusive containing, such that a process, a method, an item or a device containing a series of elements not only includes these elements, but also includes other elements that are not set forth specifically, or also includes an inherent element of such a process, method, item or device. Without further limitation, an element defined by a phrase "include a" dos not mean that other elements are excluded from the process, method, item or device including the same element.

A multi-turn-coil multiplex circuit, a method for controlling the same, a mobile device and a device using the same, provided by the embodiments of the present disclosure, are described in detail. The principal and implementation of the embodiments of the present disclosure are set forth with specific examples in the specification. The above description of the embodiments is to facilitate understanding of the methods and core idea of the embodiments of the present disclosure. Moreover, for those skilled in the art, based on the idea of the embodiments of the present disclosure, may vary the specific implementation or application. Therefore, the specification should not be interpreted as limitation to the embodiments of the present disclosure.

## Claims

1. A multi-turn-coil multiplex circuit, **characterized in that**, the multi-turn-coil multiplex circuit comprises:
a multi-turn coil (100, 200), a switch (101, 201), a Near Field Communication NFC matching circuit (102, 202) and a camera sub-board (103, 203),
wherein the switch (101, 201) comprises a common port, a first port and a second port,
the multi-turn coil (100, 200) is connected to the common port, the NFC matching circuit (102, 202) is connected to the first port, and the camera sub-board (103, 203) is connected to the second port, and
in presence of a camera-control signal, the second port is connected such that the multi-turn coil (100, 200) functions as a focus-adjusting coil for a camera in the camera sub-board (103, 203), and in absence of the camera-control signal, the first port is connected such that the multi-turn coil (100, 200) functions as a NFC antenna in the NFC matching circuit (102, 202).

2. The multi-turn-coil multiplex circuit according to claim 1, **characterized in that**, the multi-turn-coil multiplex circuit further comprises:
a CPU (204) and a NFC chip (205),
wherein the CPU (204) is respectively connected to the NFC chip (205) and the camera sub-board (103, 203), and the NFC chip (205) is connected to the NFC matching circuit (102, 202),
the CPU (204) is configured to output a NFC control signal, the camera-control signal and a switch-control signal, wherein the switch-control signal comprises a first-port-conducting signal and a second-port-conducting signal,
the NFC chip (205) is configured to generate a NFC signal according to the NFC control signal,
when a triggering event for starting the camera is sensed, the CPU (204) outputs the camera-control signal and the second-port-conducting signal, to control the switch (101, 201) to be switched to the second port, and when the second port is connected, the camera sub-board (103, 203) adjusts a current flowing through the multi-turn coil (100, 200) according to the camera-control signal output from the CPU (204), and
when a triggering event for shutting the camera is sensed, the CPU (204) outputs the first-port-conducting signal while ceasing outputting the camera-control signal, to control the switch (101, 201) to be switched to the first port, and when the first port is connected, the NFC matching circuit (102, 202) adjusts resonance of the multi-turn coil (100, 200) according to the NFC signal output from the NFC chip (205).

3. The multi-turn-coil multiplex circuit according to claim 1 or 2, **characterized in that**, the multi-turn coil (100, 200) is disposed on a main board.

4. The multi-turn-coil multiplex circuit according to claim 1 or 2, **characterized in that**, the multi-turn coil (100, 200) has a length being a quarter of an electromagnetic wave length of a NFC operating frequency.

5. A method for controlling a multi-turn-coil multiplex circuit, **characterized in that**, the multi-turn-coil multiplex circuit comprises a multi-turn coil (100, 200), a switch (101, 201), a Near Field Communication NFC matching circuit (102, 202) and a camera sub-board (103, 203), wherein the switch (101, 201) comprises a common port, a first port and a second port, the multi-turn coil (100, 200) is connected to the common port, the NFC matching circuit (102, 202) is connected to the first port, and the camera sub-board (103, 203) is connected to the second port,
wherein the method comprises:
in presence of a camera-control signal, connecting (301) the second port such that the multi-turn coil (100, 200) functions as a focus-adjusting coil for a camera in the camera sub-board (103, 203); and
in absence of the camera-control signal, connecting (302) the first port such that the multi-turn coil (100, 200) functions as a NFC antenna in the NFC matching circuit (102, 202).

6. The method according to claim 5, **characterized in that**, the multi-turn-coil multiplex circuit further comprises:
a CPU (204) and a NFC chip (205),
wherein the CPU (204) is respectively connected to the NFC chip (205) and the camera sub-board (103, 203), and the NFC chip (205) is connected to the NFC matching circuit (102, 202),
the CPU (204) is configured to output a NFC control signal, the camera-control signal and a switch-control signal, wherein the switch-control signal comprises a first-port-conducting signal and a second-port-conducting signal,
the step of, in presence of a camera-control signal, connecting the second port such that the multi-turn coil (100, 200) functions as a focus-adjusting coil for a camera in the camera sub-board (103, 203), comprises:
when a triggering event for starting the camera is sensed, outputting (3011) the camera-control signal and the second-port-conducting signal such that the switch (101, 201) is configured to be switched to the second port according to the second-port-conducting signal; and
transmitting (3012) the camera-control signal to the camera sub-board (103, 203) via the second port, wherein the camera sub-board (103, 203) is configured to adjust a current flowing through the multi-turn coil (100, 200) according to the camera-control signal, and
the step of, in absence of the camera-control signal, connecting the first port such that the multi-turn coil (100, 200) functions as a NFC antenna in the NFC matching circuit (102, 202), comprises:
when a triggering event for shutting the camera is sensed, outputting (3021) the first-port-conducting signal while ceasing outputting the camera-control signal such that the switch (101, 201) is configured to be switched to the first port according to the first-port-conducting signal;
transmitting (3022) the NFC control signal to the NFC chip (205), wherein the NFC chip (205) is configured to generate a NFC signal according to the NFC control signal; and
transmitting (3023) the NFC signal to the NFC matching circuit (102, 202) via the first port, wherein the NFC matching circuit (102, 202) is configured to adjust resonance of the multi-turn coil (100, 200) according to the NFC signal.

7. The method according to claim 5 or 6, **characterized in that**, the multi-turn coil (100, 200) is disposed on a main board.

8. The method according to claim 5 or 6, **characterized in that**, the multi-turn coil (100, 200) has a length being a quarter of an electromagnetic wave length of a NFC operating frequency.

9. A mobile device, **characterized in that**, the mobile device comprises a multi-turn-coil multiplex circuit according to any of claims 1 to 4.

10. A computer program, which when executed on a processor of a terminal for controlling a multi-turn-coil multiplex circuit of the terminal, performs a method according to any one of claims 5-8.

## Patentansprüche

1. Multiplexschaltung mit einer Spule mit mehreren Windungen, **dadurch gekennzeichnet, dass** die Multiplexschaltung mit einer Spule mit mehreren Windungen Folgendes umfasst:
eine Spule (100, 200) mit mehreren Windungen, einen Schalter (101, 201), eine NFC-(Near Field Communication)-Abgleichschaltung (102, 202) und eine Kamerasubplatine (103, 203), wobei
der Schalter (101, 201) einen gemeinsamen Port, einen ersten Port und einen zweiten Port umfasst,
die Spule (100, 200) mit mehreren Windungen mit dem gemeinsamen Port gekoppelt ist, die NFC-Abgleichschaltung (102, 202) mit dem ersten Port gekoppelt ist und die Kamerasubplatine (103, 203) mit dem zweiten Port gekoppelt ist, und
der zweite Port, in Anwesenheit eines Kamerasteuersignals, so gekoppelt ist, dass die Spule (100, 200) mit mehreren Windungen als Brennpunktjustierspule für eine Kamera in der Kamerasubplatine (103, 203) fungiert, und der erste Port, in Abwesenheit des Kamerasteuersignals, so gekoppelt ist, dass die Spule (100, 200) mit mehreren Windungen als NFC-Antenne in der NFC-Abgleichschaltung (102, 202) fungiert.

2. Multiplexschaltung mit einer Spule mit mehreren Windungen nach Anspruch 1, **dadurch gekennzeichnet, dass** die Multiplexschaltung mit einer Spule mit mehreren Windungen ferner Folgendes umfasst:
eine CPU (204) und einen NFC-Chip (205),
wobei die CPU (204) jeweils mit dem NFC-Chip (205) und der Kamerasubplatine (103, 203) gekoppelt ist und der NFC-Chip (205) mit der NFC-Abgleichschaltung (102, 202) gekoppelt ist,
die CPU (204) zum Ausgeben eines NFC-Steuersignals, des Kamerasteuersignals und eines Schaltersteuersignals konfiguriert ist, wobei das Schaltersteuersignal ein Erster-Port-Leitungssignal und ein Zweiter-Port-Leitungssignal umfasst,
der NFC-Chip (205) zum Erzeugen eines NFC-Signals gemäß dem NFC-Steuersignal konfiguriert ist,
wenn ein Auslöseereignis zum Starten der Kamera erfasst wird, die CPU (204) das Kamerasteuersignal und das Zweiter-Port-Leitungssignal ausgibt, um das Umschalten des Schalters (101, 201) auf den zweiten Port zu steuern, und wenn der zweite Port gekoppelt ist, die Kamerasubplatine (103, 203) einen Stromfluss durch die Spule (100, 200) mit mehreren Windungen gemäß dem Kamerasteuersignalausgang von der CPU (204) justiert, und
wenn ein Auslöseereignis zum Schließen der Kamera erfasst wird, die CPU (204) das Erster-Port-Leitungssignal ausgibt und die Ausgabe des Kamerasteuersignals stoppt, um das Umschalten des Schalters (101, 201) auf den ersten Port zu steuern, und wenn der erste Port gekoppelt ist, die NFC-Abgleichschaltung (102, 202) die Resonanz der Spule (100, 200) mit mehreren Windungen gemäß dem NFC-Signalausgang vom NFC-Chip (205) justiert.

3. Multiplexschaltung mit einer Spule mit mehreren Windungen nach Anspruch 1 oder 2, **dadurch gekennzeichnet, dass** die Spule (100, 200) mit mehreren Windungen auf einer Hauptplatine angeordnet ist.

4. Multiplexschaltung mit einer Spule mit mehreren Windungen nach Anspruch 1 oder 2, **dadurch gekennzeichnet, dass** die Spule (100, 200) mit mehreren Windungen eine Länge von einem Viertel einer elektromagnetischen Wellenlänge einer NFC-Betriebsfrequenz hat.

5. Verfahren zum Steuern einer Multiplexschaltung mit einer Spule mit mehreren Windungen, **dadurch gekennzeichnet, dass** die Multiplexschaltung mit einer Spule mit mehreren Windungen eine Spule (100, 200) mit mehreren Windungen, einen Schalter (101, 201), eine NFC-(Near Field Communication)-Abgleichschaltung (102, 202) und eine Kamerasubplatine (103, 203) umfasst, wobei der Schalter (101, 201) einen gemeinsamen Port, einen ersten Port und einen zweiten Port umfasst, wobei die Spule (100, 200) mit mehreren Windungen mit dem gemeinsamen Port gekoppelt ist, die NFC-Abgleichschaltung (102, 202) mit dem ersten Port gekoppelt ist und die Kamerasubplatine (103, 203) mit dem zweiten Port gekoppelt ist,
wobei das Verfahren Folgendes beinhaltet:
Koppeln (301) des zweiten Ports in Anwesenheit eines Kamerasteuersignals so, dass die Spule (100, 200) mit mehreren Windungen als Brennpunktjustierspule für eine Kamera in der Kamerasubplatine (103, 203) fungiert; und
Koppeln (302) des ersten Ports in Abwesenheit des Kamerasteuersignals so, dass die Spule (100, 200) mit mehreren Windungen als NFC-Antenne in der NFC-Abgleichschaltung (102, 202) fungiert.

6. Verfahren nach Anspruch 5, **dadurch gekennzeichnet, dass** die Multiplexschaltung mit einer Spule mit mehreren Windungen ferner Folgendes umfasst:
eine CPU (204) und einen NFC-Chip (205),
wobei die CPU (204) jeweils mit dem NFC-Chip (205) und der Kamerasubplatine (103, 203) gekoppelt ist und der NFC-Chip (205) mit der NFC-Abgleichschaltung (102, 202) gekoppelt ist,
die CPU (204) zum Ausgeben eines NFC-Steuersignals, des Kamerasteuersignals und eines Schaltersteuersignals konfiguriert ist, wobei das Schaltersteuersignal ein Erster-Port-Leitungssignal und ein Zweiter-Port-Leitungssignal umfasst,
wobei der Schritt des Koppelns des zweiten Ports in Anwesenheit eines Kamerasteuersignals so, dass die Spule (100, 200) mit mehreren Windungen als Brennpunktjustierspule für eine Kamera in der Kamerasubplatine (103, 203) fungiert, Folgendes beinhaltet:
Ausgeben (3011), wenn ein Auslöseereignis zum Starten der Kamera erfasst wird, des Kamerasteuersignals und des Zweiter-Port-Leitungssignals so, dass der Schalter (101, 201) zum Umschalten auf den zweiten Port gemäß dem Zweiter-Port-Leitungssignal konfiguriert ist; und
Senden (3012) des Kamerasteuersignals zur Kamerasubplatine (103, 203) über den zweiten Port, wobei die Kamerasubplatine (103, 203) zum Justieren eines Stromflusses durch die Spule (100, 200) mit mehreren Windungen gemäß dem Kamerasteuersignal konfiguriert ist, und
wobei der Schritt des Koppelns des ersten Ports in Abwesenheit des Kamerasteuersignals so, dass die Spule (100, 200) mit mehreren Windungen als NFC-Antenne in der NFC-Abgleichschaltung (102, 202) fungiert, Folgendes beinhaltet:
Ausgeben (3021), wenn ein Auslöseereignis zum Schließen der Kamera erfasst wird, des Erster-Port-Leitungssignals und dabei Stoppen der Ausgabe des Kamerasteuersignals, so dass der Schalter (101, 201) zum Umschalten auf den ersten Port gemäß dem Erster-Port-Leitungssignal konfiguriert ist;
Senden (3022) des NFC-Steuersignals zum NFC-Chip (205), wobei der NFC-Chip (205) zum Erzeugen eines NFC-Signals gemäß dem NFC-Steuersignal konfiguriert ist; und
Senden (3023) des NFC-Signals zu einer NFC-Abgleichschaltung (102, 202) über den ersten Port, wobei die NFC-Abgleichschaltung (102, 202) zum Justieren der Resonanz der Spule (100, 200) mit mehreren Windungen gemäß dem NFC-Signal konfiguriert ist.

7. Verfahren nach Anspruch 5 oder 6, **dadurch gekennzeichnet, dass** die Spule (100, 200) mit mehreren Windungen auf einer Hauptplatine angeordnet ist.

8. Verfahren nach Anspruch 5 oder 6, **dadurch gekennzeichnet, dass** die Spule (100, 200) mit mehreren Windungen eine Länge von einem Viertel einer elektromagnetischen Wellenlänge einer NFC-Betriebsfrequenz hat.

9. Mobilfunkgerät, **dadurch gekennzeichnet, dass** das Mobilfunkgerät eine Multiplexschaltung mit einer Spule mit mehreren Windungen nach einem der Ansprüche 1 bis 4 umfasst.

10. Computerprogramm, das bei Ausführung auf einem Prozessor eines Endgeräts zum Steuern einer Multiplexschaltung mit einer Spule mit mehreren Windungen des Endgeräts ein Verfahren nach einem der Ansprüche 5-8 ausführt.

## Revendications

1. Circuit de multiplexage à bobine multispire, **caractérisé en ce que** le circuit de multiplexage à bobine multispire comprend :
une bobine multispire (100, 200), un commutateur (101, 201), un circuit d'adaptation de communication en champ proche NFC (102, 202) et une sub-carte caméra (103,203),
dans lequel le commutateur (102, 201) comprend un port commun, un premier port et un deuxième port,
la bobine multispire (100, 200) est connectée au port commun, le circuit d'adaptation NFC (102, 202) est connecté au premier port et la sub-carte caméra (103, 203) est connectée au deuxième port, et
en présence d'un signal de commande de caméra, le deuxième port est connecté de telle sorte que la bobine multispire (100, 200) fonctionne comme une bobine d'ajustement focal pour une caméra dans la sub-carte caméra (103, 203), et en l'absence du signal de commande de caméra, le premier port est connecté de telle sorte que la bobine multispire (100, 200) fonctionne comme une antenne NFC dans le circuit d'adaptation NFC (102, 202).

2. Circuit de multiplexage à bobine multispire selon la revendication 1, **caractérisé en ce que** le circuit de multiplexage à bobine multispire comprend en outre :
une CPU (204) et une puce NFC (205),
dans lequel la CPU (204) est connectée respectivement à la puce NFC (205) et à la sub-carte caméra (103, 203), et la puce NFC (205) est connectée au circuit d'adaptation NFC (102, 202),
la CPU (204) est configurée pour sortir un signal de commande NFC, le signal de commande de caméra et un signal de commande de commutation, où le signal de commande de commutation comprend un signal de conduction du premier port et un signal de conduction du deuxième port,
la puce NFC (205) est configurée pour générer un signal NFC conformément au signal de commande NFC,
lorsqu'un événement de déclenchement pour mettre la caméra en marche est détecté, la CPU (204) sort le signal de commande de caméra et le signal de conduction du deuxième port, pour commander le commutateur (101, 201) pour être commuté au deuxième port, et lorsque le deuxième port est connecté, la sub-carte caméra (103, 203) ajuste un courant coulant à travers la bobine multispire (100, 200) conformément à la sortie de signal de commande de caméra de la CPU (204), et
lorsqu'un événement de déclenchement pour arrêter la caméra est détecté, la CPU (204) sort le signal de conduction du premier port tout en cessant de sortir le signal de commande de caméra, pour commander le commutateur (101, 201) pour être commuté au premier port, et lorsque le premier port est connecté, le circuit d'adaptation NFC (102, 202) ajuste la résonance de la bobine multispire (100, 200) conformément à la sortie du signal NFC de la puce NFC (205).

3. Circuit de multiplexage à bobine multispire selon la revendication 1 ou 2, **caractérisé en ce que** la bobine multispire (100, 200) est disposée sur une carte mère.

4. Circuit de multiplexage à bobine multispire selon la revendication 1 ou 2, **caractérisé en ce que** la bobine multispire (100, 200) a une longueur qui est un quart d'une longueur d'onde électromagnétique d'une fréquence NFC opérationnelle.

5. Procédé de commande d'un circuit de multiplexage à bobine multispire, **caractérisé en ce que** le circuit de multiplexage à bobine multispire comprend une bobine multispire (100, 200), un commutateur (201, 201), un circuit d'adaptation de communication en champ proche NFC (102, 202) et une sub-carte caméra (103, 203), dans lequel le commutateur (101, 201, comprend un port commun, un premier port et un deuxième port, la bobine multispire (100, 200) est connectée au port commun, le circuit d'adaptation NFC (102, 202) est connecté au premier port et la sub-carte caméra (103, 203) est connectée au deuxième port,
où le procédé comprend :
en présence d'un signal de commande de caméra, connecter (301) le deuxième port de telle sorte que la bobine multispire (100, 200) fonctionne comme une bobine d'ajustement focal pour une caméra dans la sub-carte caméra (103, 203), et
en l'absence du signal de commande de caméra, connecter (302) le premier port de telle sorte que la bobine multispire (100, 200) fonctionne comme une antenne NFC dans le circuit d'adaptation NFC (102, 202).

6. Procédé selon la revendication 5, **caractérisé en ce que** le circuit de multiplexage à bobine multispire comprend en outre :
une CPU (204) et une puce NFC (205),
dans lequel la CPU (204) est connectée respectivement à la puce NFC (205) et à la sub-carte caméra (103, 203), et la puce NFC (205) est connectée au circuit d'adaptation NFC (102, 202),
la CPU (204) est configurée pour sortir un signal de commande NFC, le signal de commande de caméra et un signal de commande de commutation, où le signal de commande de commutation comprend un signal de conduction du premier port et un signal de conduction du deuxième port,
l'étape consistant à, en présence d'un signal de commande de caméra, connecter le deuxième port de telle sorte que la bobine multispire (100, 200) fonctionne comme une bobine d'ajustement focal pour une caméra dans la sub-carte caméra (103, 203),
lorsqu'un événement de déclenchement pour mettre la caméra en marche est détecté, sortir (3011) le signal de commande de caméra et le signal de conduction du deuxième port de telle sorte que le commutateur (101, 201) est configuré pour être commuté au deuxième port conformément au signal de conduction du deuxième port ; et
transmettre (3012) le signal de commande de caméra à la sub-carte caméra (103, 203) par le deuxième port, où la sub-carte caméra (103, 203) est configurée pour ajuster un courant coulant à travers la bobine multispire (100, 200) conformément au signal de commande de caméra ; et
l'étape consistant à, en l'absence du signal de commande de caméra, connecter le premier port de telle sorte que la bobine multispire (100, 200) fonctionne comme une antenne NFC dans le circuit d'adaptation NFC (102, 202), comprend :
lorsqu'un événement de déclenchement pour arrêter la caméra est détecté, sortir (3021) le signal de conduction du premier port tout en cessant de sortir le signal de commande de caméra de telle sorte que le commutateur (101, 201) est configuré pour être commuté au premier port conformément au signal de conduction du premier port ;
transmettre (3022) le signal de commande NFC à la puce NFC (205), où la puce NFC (205) est configurée pour générer un signal NFC conformément au signal de commande NFC ; et
transmettre (3023) le signal NFC au circuit d'adaptation NFC (102, 202) par le premier port, où le circuit d'adaptation NFC (102, 202) est configuré pour ajuster la résonance dans la bobine multispire (100, 200) conformément au signal NFC.

7. Procédé selon la revendication 5 ou 6, **caractérisé en ce que** la bobine multispire (100, 200) est disposée sur une carte mère.

8. Procédé selon la revendication 5 ou 6, **caractérisé en ce que** la bobine multispire (100, 200) a une longueur qui est un quart d'une longueur d'onde électromagnétique d'une fréquence NFC opérationnelle.

9. Dispositif portable, **caractérisé en ce que** le dispositif portable comprend un circuit de multiplexage à bobine multispire selon l'une quelconque des revendications 1 à 4.

10. Programme informatique qui, lorsque exécuté sur un processeur d'un terminal pour commander un circuit de multiplexage à bobine multispire du terminal, met en oeuvre un procédé selon l'une quelconque des revendications 5-8.
